(19) **Europäisches Patentamt / European Patent Office / Office européen des brevets**

(11) **EP 4 407 645 A1**

(12) # EUROPEAN PATENT APPLICATION
published in accordance with Art. 153(4) EPC

(43) Date of publication:
**31.07.2024 Bulletin 2024/31**

(21) Application number: **22864003.3**

(22) Date of filing: **17.06.2022**

(51) International Patent Classification (IPC):
**H01F 41/04** *(2006.01)*       **B21F 3/06** *(2006.01)*
**H02K 3/04** *(2006.01)*       **H02K 15/04** *(2006.01)*

(52) Cooperative Patent Classification (CPC):
**B21F 3/06; H01F 41/04; H02K 3/04; H02K 15/04**

(86) International application number:
**PCT/JP2022/024375**

(87) International publication number:
**WO 2023/032415 (09.03.2023 Gazette 2023/10)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(30) Priority: **31.08.2021   JP 2021140916**

(71) Applicant: **Selco Co., Ltd.
Komoro-shi, Nagano 384-0808 (JP)**

(72) Inventors:
• **KOBAYASHI, Nobutomo**
  **Komoro-shi, Nagano 384-0808 (JP)**
• **SAKURAI, Shinya**
  **Komoro-shi, Nagano 384-0808 (JP)**

(74) Representative: **Mewburn Ellis LLP
Aurora Building
Counterslip
Bristol BS1 6BX (GB)**

(54) **METHOD FOR MANUFACTURING COIL AND JIG FOR BENDING COIL**

(57)   A method of manufacturing a coil includes: a planar coil forming step of winding a conductor wire in a plurality of layers (or a plurality of rows and a plurality of layers) to form an air-core planar coil; a first heating step of heating the planar coil formed in the planar coil forming step to a predetermined temperature; a bending step of bending at least a part of the planar coil heated in the first heating step at a predetermined angle in a direction vertical to a plane of the planar coil; and a second heating step of heating a bent coil formed in the bending step at a predetermined temperature for a predetermined time.

Fig. 1

```
                START
                  │
        ┌─────────────────────┐
        │  PLANAR COIL        │ ～ S1
        │  FORMING STEP       │
        └─────────────────────┘
                  │
        ┌─────────────────────┐
        │  FIRST HEATING STEP │ ～ S2
        └─────────────────────┘
                  │
        ┌─────────────────────┐
        │  BENDING STEP       │ ～ S3
        └─────────────────────┘
                  │
        ┌─────────────────────┐
        │  SECOND HEATING     │ ～ S4
        │  STEP               │
        └─────────────────────┘
                  │
        ┌─────────────────────┐
        │  COOLING STEP       │ ～ S5
        └─────────────────────┘
                  │
        ┌─────────────────────┐
        │  COIL REMOVING      │ ～ S6
        │  STEP               │
        └─────────────────────┘
                  │
                 END
```

EP 4 407 645 A1

## Description

Technical Field

The present invention relates to a method of manufacturing a coil in a hook shape and a coil bending jig, in which the hook shape is obtained in such a way that a part of a planar coil in which conductor wire is wound in a plurality of layers (or a plurality of rows and a plurality of layers) is bent at a predetermined angle in a direction vertical to a plane of the planar coil.

Background Art

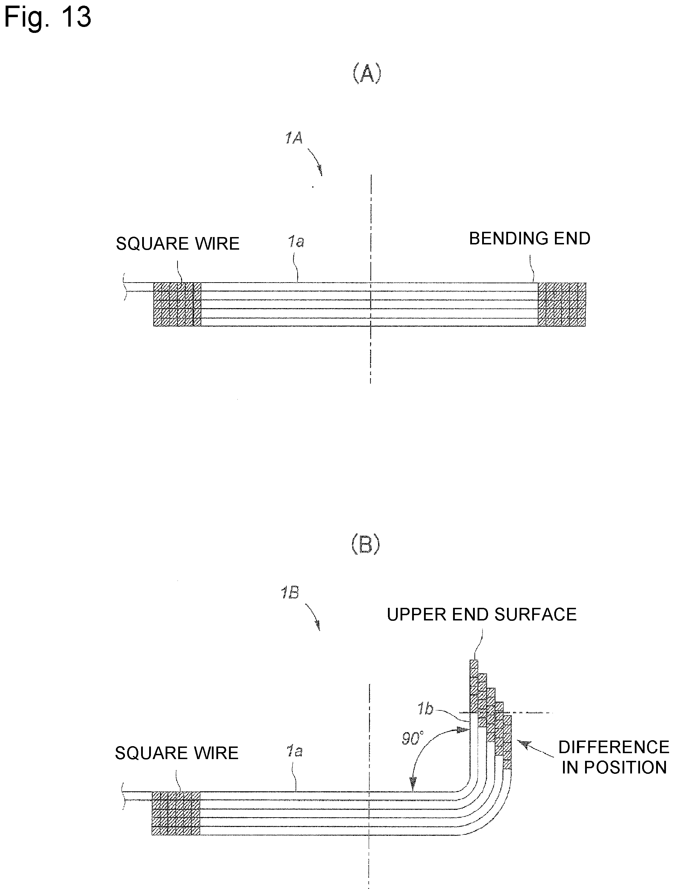

As shown in Figure 13, commonly used conventional methods of manufacturing an irregular-shaped coil such as a hook-shaped coil include a method of: forming a planar coil 1A, which is wound in a plurality of layers (or a plurality of rows and a plurality of layers) and has a predetermined shape (for example, an oval shape or a substantially rectangular shape), with a round wire having a circular cross-section or a square wire having a square cross-section; and then bending a part of the obtained planar coil 1A in a vertical direction vertical to the planar coil portion 1a, thereby forming an L-shaped coil 1B.

Furthermore, a method of manufacturing a coil has been proposed that includes a 90 degree bending step in which a winding wire (planar coil) formed in a winding process undergoes bending (for example, Patent Literature 1) .

The method of manufacturing a coil described in Patent Literature 1 uses a pair of bending dies to bend the winding wire (planar coil) formed in the winding process by 90 degrees.

Citation List

Patent Literature

Patent Literature 1: Japanese Patent Laid-Open No. 2013-251995

Summary of Invention

Technical Problem

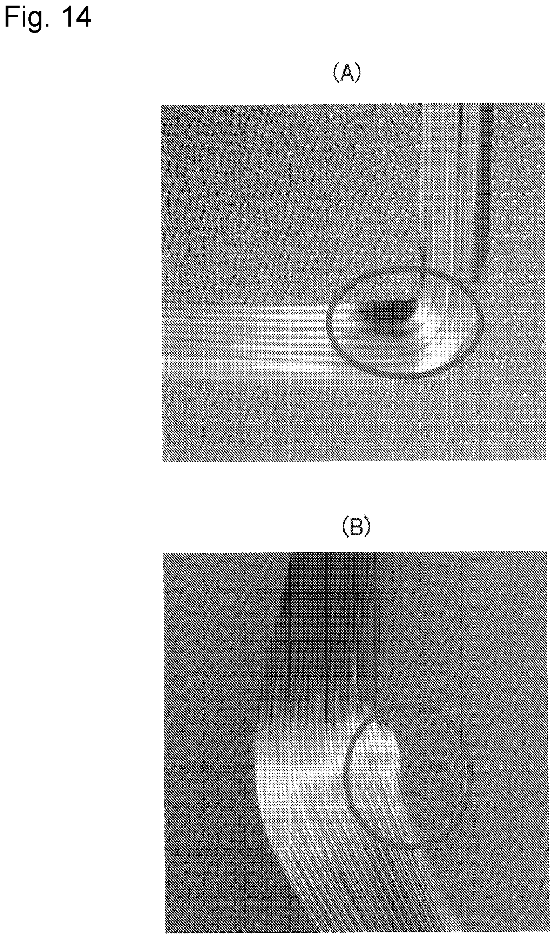

However, there has been problems as follows: the conventional method includes forming a planar coil 1A wound in a plurality of layers (or a plurality of rows and a plurality of layers) and forming a part of the obtained planar coil 1A into an L-shape obtained by bending it in the vertical direction, as shown in Figure 13; and this causes the wires to differ from each other in position after bending at the end portion of the bent portion (vertical portion) 1b (below a two-dot chain line in Figure 13(B)), and therefore causes negative effects on the characteristics of the coil such as increase in the potential difference between winding wires and influence on structural assembly. Furthermore, there has been a problem such that the bent portion of the coil has a lateral overhang, as shown in Figure 14.

Furthermore, the method of manufacturing a coil described in Patent Literature 1 has had a problem such that when a planar coil undergoes bending processing in a perpendicular direction, a large stress is applied between the coil wires at the bent portion. Another problem has been such that the spring back of the copper core wire and the insulating film layer on its surface is strong, resulting in a generated return larger than the intended bent position.

In the conventional method of manufacturing a coil described above, there has also been a problem such that the bending processing deforms the copper core wire to distort and fine the crystals, so that resistance to deformation increases, the hardness increases, and elongation decreases, resulting in a large stress generated inside the coil wires at the bent portion. Furthermore, the conductor wire (material) for coil winding is usually annealed copper wire, but there are also wire materials that have undergone secondary or tertiary processing. Such wires are wire materials that have the above-mentioned problems due to stress distortion in the secondary or tertiary processing.

Therefore, an object of the present invention is to provide a method of manufacturing a coil and a coil bending jig, capable of maintaining characteristics of the coil without reducing degree of alignment of wires due to bending processing.

Another object of the present invention is to provide a method of manufacturing a coil and a coil bending jig, capable of finishing coil dimensions with high accuracy after bending processing and capable of reducing stress between coil wires and inside the wires at a bent portion.

Solution to Problem

According to the present invention, a method of manufacturing a coil includes: a planar coil forming step of winding a conductor wire in a plurality of layers (or a plurality of rows and a plurality of layers) to form an air-core planar coil; a first heating step of heating the planar coil formed in the planar coil forming step to a predetermined temperature; a bending step of bending at least a part of the planar coil heated in the first heating step at a predetermined angle in a direction vertical to a plane of the planar coil; and a second heating step of heating a bent coil formed in the bending step at a predetermined temperature for a predetermined time.

The method makes it possible to maintain the characteristics of the coil without reducing the degree of alignment of the wires due to bending processing, through the following: winding a conductor wire in a plurality of layers (or a plurality of rows and a plurality of layers); heating the formed planar coil to a predetermined temperature; bending a part of the planar coil at a predetermined angle in a direction vertical to the surface of the planar coil in the bending step; and heating the formed bent coil at a predetermined temperature for a predetermined time to perform annealing treatment. Furthermore, heating the bent coil after bending processing to perform annealing treatment makes it possible to eliminate a lateral overhang in the bent portion of the coil, and reduce stress between the coil wires and inside the wires to reduce spring back that occurs in the formed product of the coil. This allows the coil dimensions after bending processing to be finished with high accuracy.

It is preferable that the method of manufacturing a coil further include: a forming step of forming the bent coil formed in the bending step into a predetermined shape and dimensions with a forming jig; and a third heating step of heating the bent coil formed in the forming step at a predetermined temperature for a predetermined time.

It is preferable that in the bending step, both side surfaces of a bent portion are pressed with a pressing jig, and bending processing is performed with repeated loosening and tightening of pressure on both sides of the bent portion.

It is preferable that the planar coil have a pair of parallel portions that extend parallel to each other and a pair of connecting portions that connect end portions of the pair of parallel portions, and in the planar coil forming step in which a material is a wire other than fusion wire wind, only the pair of parallel portions of the planar coil are wound along with application of adhesive varnish to each layer of the parallel portions.

It is preferable that the conductor wire have a fusion layer on a surface of the conductor wire, and in the first heating step, the planar coil is heated to a softening temperature of the fusion layer.

It is preferable that in the first heating step and the bending step, heating processing and bending processing are performed separately in a plurality of different temperature zones.

It is preferable that, each layer of the planar coil is formed in the planar coil forming step such that the layer has a predetermined dimension gradually reducing as progress toward the vertical direction with a step formed between the layers at an end on a side where bending processing is to be performed.

It is preferable that in the first heating step, the second heating step, and the third heating step, a heating technique is adopted in which high-frequency induction heating is used to raise a temperature of a jig in which the planar coil or the bent coil is set, to conduct heat from the jig to the planar coil or the bent coil.

According to the present invention, a coil bending jig is a coil bending jig for manufacturing a coil having a hook shape obtained by bending a part of a planar coil, in which a conductor wire is wound in a plurality of layers (or a plurality of rows and a plurality of layers), at a predetermined angle in a direction vertical to a plane of the planar coil, and the coil bending jig includes a pressing jig that presses both side surfaces of a bent portion of the coil, in which the pressing jig is configured to repeatedly loosen and tighten pressure on both side surfaces of the bent portion when bending processing is performed.

The coil bending jig includes a pressing jig that presses both side surfaces of the bent portion of the coil. When bending processing is performed, the pressing jig repeatedly loosens and tightens the pressure on both side surfaces of the bent portion. This causes the bent portion of the coil to have no lateral overhang (see Figure 14) as in the conventional manufacturing methods. This allows the coil dimensions after bending processing to be finished with high accuracy.

Advantageous Effects of Invention

The method of manufacturing a coil of the present invention includes heating the planar coil to the predetermined temperature, bending a part of the planar coil at a predetermined angle in a direction vertical to the surface of the planar coil in the bending step; and heating the formed bent coil to the predetermined temperature, forming the bent coil into the predetermined shape and dimensions with the forming jig, and heating the formed coil at a predetermined temperature for a predetermined time to perform annealing treatment. Each layer of the coil is formed in the planar coil forming step such that the layer has a predetermined dimension gradually reducing as progress toward the vertical direction with a step formed between the layers at the end on the side where bending processing is to be performed. This makes it possible to maintain the characteristics of the coil without reducing the degree of alignment of the wires due to bending processing. In addition, annealing treatment is performed on the formed coil after the coil is formed into a predetermined shape and dimensions with the forming jig, making it possible to reduce stress between the coil wires and inside the wires and to reduce spring back that occurs in the formed product of the coil. This allows the coil dimensions after bending processing to be finished with high accuracy.

The coil bending jig of the present invention includes a pressing jig that presses both side surfaces of the bent portion of the coil. The pressing jig is configured to repeatedly loosen and tighten pressure on both side surfaces of the bent portion when bending processing is performed. This causes the bent portion of the coil to have no lateral overhang (see Figure 14) as in the conventional manufacturing methods. This allows the coil dimensions after bending processing to be finished with high accuracy.

Brief Description of Drawings

[Figure 1] Figure 1 is a flowchart showing steps of manufacturing a coil through a method of manufacturing a coil according to a first embodiment of the present invention.
[Figure 2] Figure 2 is a perspective view showing an example of a hook-shaped coil manufactured through the method of manufacturing a coil according to the present invention.
[Figure 3] Figure 3 is a cross-sectional view schematically showing a winding jig used in a planar coil forming step of the method of manufacturing a coil according to the present invention and a formed planar coil.
[Figure 4] Figure 4 is a perspective view showing an example of a coil bending jig to be used in a bending step of the method of manufacturing a coil according to the present invention and a state in which the coil is bent.
[Figure 5] Figure 5 is a plan view and a side view schematically showing another configuration example of a coil bending jig according to the present invention.
[Figure 6] Figure 6 is a cross-sectional view showing a coil obtained in the bending step of the method of manufacturing a coil according to the present invention.
[Figure 7] Figure 7 is a flowchart showing steps of manufacturing a coil through a method of manufacturing a coil according to a second embodiment of the present invention.
[Figure 8] Figure 8 is a perspective view showing an example of a forming jig to be used in a forming step of the method of manufacturing a coil according to the present invention.
[Figure 9] Figure 9 is a perspective view showing a state in which a coil obtained in a bending step is placed in a forming jig and formed by pressing in the forming step.
[Figure 10] Figure 10 is a perspective view showing a state in which jigs for pressing side surfaces of the coil are attached in the forming step.
[Figure 11] Figure 11 is a perspective view showing a state in which jigs for pressing a hook-shaped bent end portion of the coil are attached in the forming step.
[Figure 12] Figure 12 is a perspective view showing an example of a hook-shaped coil manufactured through the method of manufacturing a coil according to the present invention.
[Figure 13] Figure 13 is a cross-sectional view schematically showing a conventional method of manufacturing a coil, in which Figure 13(A) is a planar coil formed in a planar coil forming step, and Figure 13(B) is a hook-shaped coil obtained in a bending step.
[Figure 14] Figure 14 is a diagram showing a state of a bent portion of the hook-shaped coil manufactured through a conventional method of manufacturing a coil.

Description of Embodiments

Hereinafter, embodiments of a method of manufacturing a coil and a coil bending jig according to the present invention will be described with reference to the drawings.

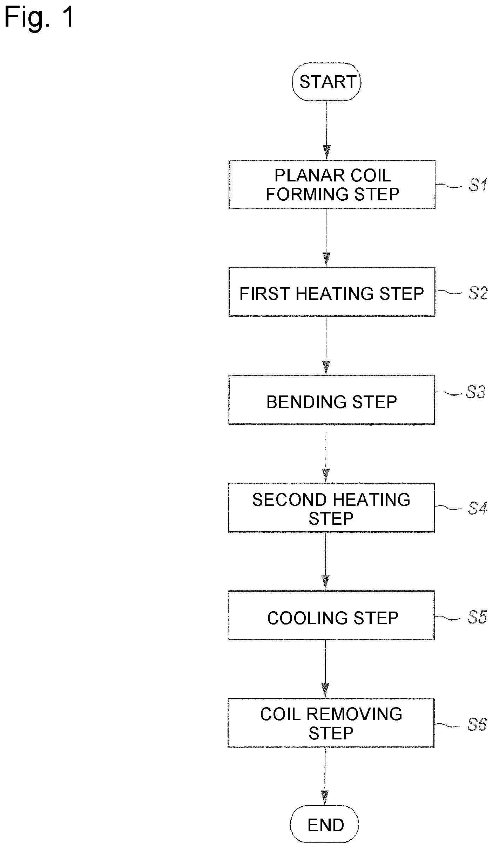

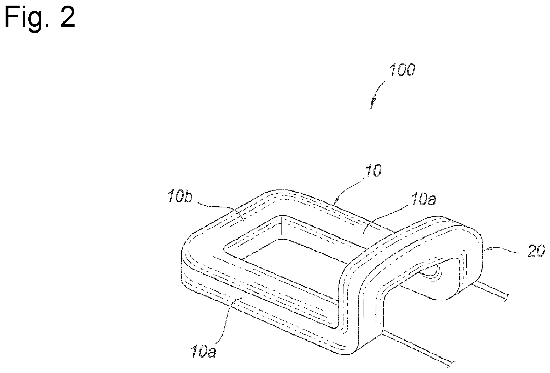

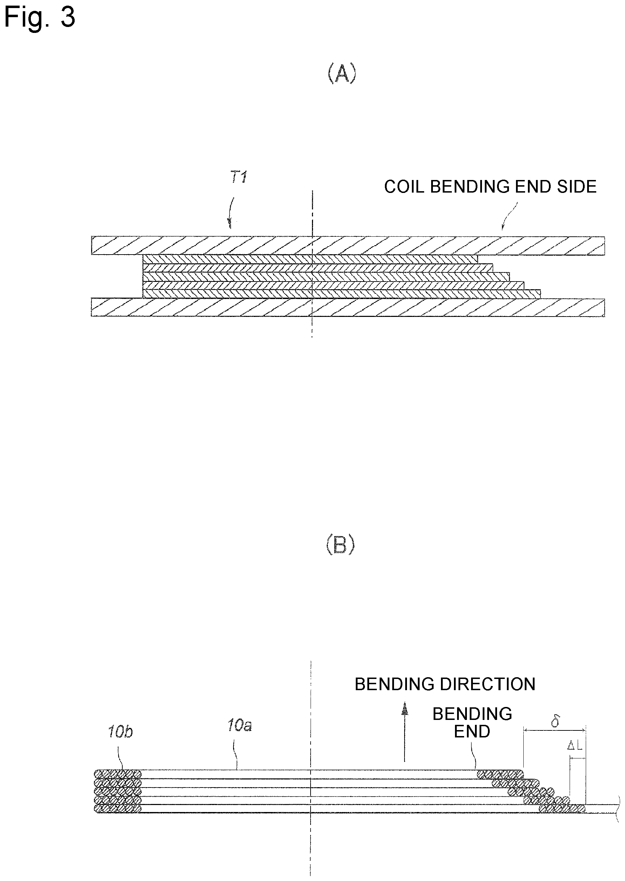

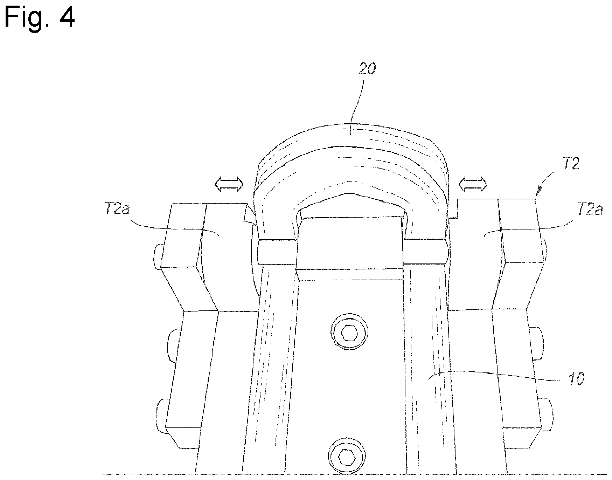

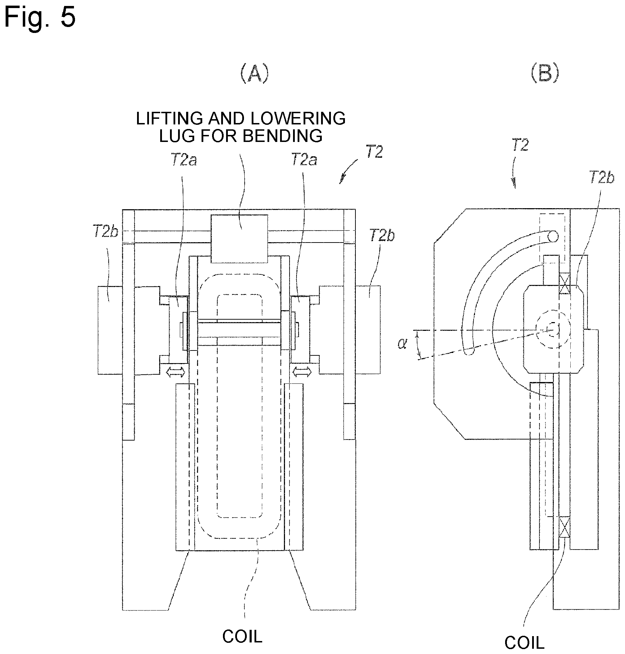

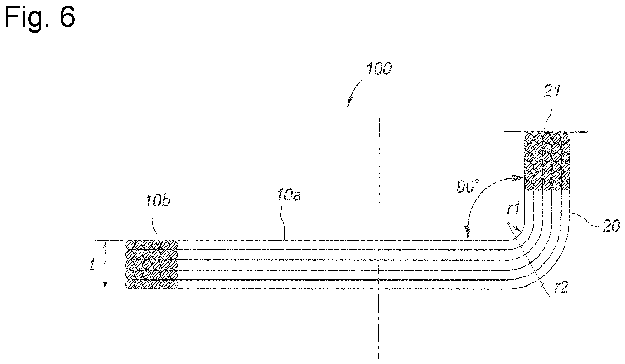

Figure 1 shows steps of manufacturing a hook-shaped coil through a method of manufacturing a coil according to a first embodiment of the present invention. Figure 2 shows a coil 100 manufactured by the method of manufacturing a coil of the present invention. Figure 3 shows a winding jig used in a planar coil forming step and a formed planar coil, where Figure 3(A) is a cross-sectional view of the winding jig and Figure 3(B) is a cross-sectional view of the planar coil. Figure 4 shows an example of a coil bending jig used in the bending step and a state in which the coil is bent. Figure 5 shows another configuration example of a coil bending jig used in the bending step. Figure 6 is a cross section showing the coil 100 obtained in the bending step.
As shown in Figure 1, a method of manufacturing a coil according to a first embodiment of the present invention includes: a planar coil forming step (step S1) of winding a conductor wire in a plurality of layers (or a plurality of rows and a plurality of layers) to form an air-core planar coil; a first heating step (step S2) of heating the planar coil formed in the planar coil forming step to a predetermined temperature; a bending step (step S3) of bending at least a part of the planar coil heated in the first heating step at a predetermined angle in a direction vertical to the surface of the planar coil; a second heating step (step S4) of heating the bent coil formed in the bending step at a predetermined temperature for a predetermined time; a cooling step (step S5) of cooling the bent coil; and a coil removing step (step S6) of removing the bent coil from the bending jig.

The coil 100 manufactured through the method of manufacturing a coil of the present invention includes a planar coil portion 10 and a bent portion 20, as shown in Figure 2. This coil 100 is formed into a hook shape by vertically extending a part of a planar coil, having a pair of long sides and a pair of short sides, in which conductor wire is wound in a plurality of layers (or a plurality of rows and a plurality of layers). In the present invention, the conductor wire is an enameled wire, an enameled wire coated with an insulating film (double coated wire having two insulating layers), a composite wire in which a plurality of enameled wires are collectively covered with an insulating outer layer, or an enameled wire having a fusion layer made of thermoplastic resin on its surface (hereinafter referred to as self-fusion wire). The conductor wire is a round wire with a circular cross-sectional shape or a square wire with a square cross-sectional shape.

The planar coil portion 10 has a pair of parallel portions 10a that extend parallel to each other, and a connecting portion 10b that connects one ends of the pair of parallel parts.

The bent portion 20 is formed by, for example, bending one end (bending end) in a longitudinal direction of a planar coil by 90 degrees. On the upper end surface 21 of the bent portion 20, the winding of each layer is formed on the same plane (see Figure 6). Note that the bending angle is not limited to 90 degrees.

In the method of manufacturing a coil according to the first embodiment of the present invention, as shown in Figure 1, a planar coil forming step (step S1) first winds a conductor wire (for example, an enameled wire without a fusion layer on the surface or a self-fusion wire) in a plurality of layers, to form a planar coil having a pair of parallel portions 10a and a connecting portion 10b that connects the one ends of the pair of parallel portions. When an enameled wire is used that does not have a fusion layer on the surface (or a double coated wire having a double insulating layer), only the pair of parallel portions 10a in the planar coil are wound along with application of adhesive varnish to each layer of the parallel portions 10a in the planar coil forming step. In this case, adhesive varnish is applied. Accordingly, after winding, the planar coil is heated to the curing temperature of the adhesive varnish (for example, 230°C) for a predetermined time (for example, 1 hour), so that the winding wire is fixed. In contrast, when a self-fusion wire is used, the winding wire is heated to the curing temperature of the fusion layer, to be fixed. The heating here is both for annealing treatment of the wires themselves and for removal of processing stress in winding. Then, the planar coil is cooled and removed from the winding jig T1.

In addition, when winding is performed to form each layer of the planar coil in the planar coil forming step, the winding core (core) shown in Figure 3(A) is used, and the layer is formed to have a predetermined dimension ΔL gradually reducing as progress toward the vertical direction (bending direction) with a step formed between the layers at the end on the side where bending processing is to be performed. A part of the planar coil is bent in a vertical direction in the bending step so that the upper end surface formed by the portions that have become vertical is parallel to the plane of the planar coil (see Figure 6). As shown in Figure 6, r1 is the inner radius of the bent portion, r2 is the outer radius thereof, and t is the thickness of the coil.

Here, when the bending angle is 90 degrees, the dimensional difference δ at the end portion on the bending side is determined by Expression (1) from the 1/4 circumferential distances.

$$\delta = (2\pi \times r2)/4 - (2\pi \times r1)/4 \ \ldots \ (1)$$

Since r2 = r1 + t, Expression (1) can be rewritten as (2).

$$\delta = 1/2 \times \pi \times t \ \ldots \ (2)$$

Thereby, the dimensional difference (predetermined dimension) ΔL between adjacent layers can be calculated.
In other words,

$$\Delta L = (1/2 \times \pi \times t)/(d - 1) \ \ldots \ (3)$$

where: π is pi (constant), t is the thickness of the planar coil, and d is the number of winding layers.
Figure 3(B) shows a cross section of the planar coil formed in the planar coil forming step of the method of manufacturing a coil according to the present invention.

Next, in the first heating step (step S2), the planar coil is set in a coil bending jig T2 as shown in Figure 4 or 5, for example, and heated to a predetermined temperature. Here, in the case of a self-fusion wire, the planar coil obtained in the planar coil forming step is heated to the softening temperature (or melting temperature) of the fusion layer on the conductor wire surface. For example, if the fusion layer is a type having a fusion temperature of 150°C, the heating temperature is set to 160 to 170°C. In contrast, in the case of an enameled wire coated with adhesive varnish in the planar coil forming step, the planar coil is heated to the softening temperature (or melting temperature) of the adhesive varnish (for example, 180°C). Note that, since the softening temperature (or melting temperature) differs depending on the type of adhesive varnish, the heating temperature can be set appropriately. Here, the heating techniques to be used can include a technique of using a constant temperature bath, a technique of applying electricity to the coil to raise the temperature of the coil by self-heating, and a technique of raising the temperature of the jig by high-frequency induction heating (IH) to conduct the heat to the coil. In consideration of productivity, it is preferable to use a high-frequency induction heating technique. The method is expected to shorten the time for raising the temperature. In an experiment, heating the coil to 170°C required a time of 8 to 9 minutes when the output of high-frequency induction heating was 2 kW, and required a time of about 3 minutes when the output thereof was 5 kW. In contrast, the method using a constant temperature bath required a time of about 30 minutes or more. The heating in the first heating step softens the fusion layer and loosens the adhesion between the wires in the layers of the planar coil, making it possible to minimize the stress that is to be caused by shift between the wires in bending in the subsequent bending step. Furthermore, softening the fusion layer makes it possible to reduce the frictional force between the wires in the bending processing.

Next, in a bending step (step S3), a part of the planar coil heated to a predetermined temperature is bent in the vertical direction. In the bending step, both side surfaces of the bent portion are pressed with side surface pressing jigs T2a of the coil bending jig T2, and the bending processing is performed with repeated loosening and tightening of the pressure on both side surfaces of the bent portion in order to prevent the coil winding wire from collapsing. In the present invention, the coil bending jig T2 includes the side surface pressing jigs T2a, and the side surface pressing jigs T2a are configured to repeatedly loosen and tighten the pressure on both side surfaces of the bent portion when the bending processing is performed. This can reduce the frictional force between the wires in bending processing. Figure 4 shows an example of the coil bending jig T2 used in the bending step. As shown in Figure 4, the pressure can be manually loosened and tightened repeatedly with the coil bending jig T2. Figure 5 shows another configuration example of the coil bending jig T2 used in the bending step. As shown in Figure 5, the vibration mechanism T2b that repeatedly loosens and tightens the pressure can includes a drive mechanism having an air cylinder, a servo motor, or the like. The vibration width of the vibration mechanism T2b is determined within a range that does not cause the wires to collapse. Note that, in coil bending processing, care needs to be taken not to make the bending radius too small. Since the elongation of the coating for the coil wires is generally guaranteed to be up to about 30%, it is desirable to take into consideration that the elongation due to bending processing does not exceed 30%. However, in reality, the elongation of the bending is not limited within the bent area in 90 degrees, but about 3 to 10% of the elongation is distributed over the straight portion, so this can also be taken into consideration.

Next, in a second heating step (step S4), the bent coil formed in the forming step is heated at a predetermined temperature (for example, 230°C to 240°C) for a predetermined time (for example, 1.5 h), to perform annealing treatment on the winding wire. Here, for example, the bent coil and the forming jig T3 are heated together in a state in which the bent coil is mounted on the forming jig T3. Through this, heating the copper after processing causes the fine crystals to recrystallize to soften the copper, making it possible to reduce stress against coil bending and forming processing so that the spring back is made small. This allows the coil dimensions after bending processing to be finished with high accuracy. Here, the heating techniques to be used can include a technique of using a constant temperature bath, a technique of applying electricity to the coil to raise the temperature of the coil by self-heating, and a technique of raising the temperature of the jig by high-frequency induction heating (IH) to conduct the heat to the coil. However, the heating in the planar coil forming step (step S1) and the first heating step (step S2) may also be a heating step serving for this purpose.

Next, in a cooling step (step S5), the bent coil and the forming jig T3 are cooled together to room temperature. Finally, in a coil removing step (step S6), the bent coil is removed from the forming jig T3 to obtain the coil 100.

As described above, the method of manufacturing a coil according to the first embodiment of the present invention includes: winding a conductor wire in a plurality of layers (or a plurality of rows and a plurality of layers); heating the formed planar coil to a predetermined temperature; bending a part of the planar coil at a predetermined angle in a direction vertical to the surface of the planar coil in the bending step; and heating the formed bent coil at a predetermined temperature for a predetermined time to perform annealing treatment. Each layer of the coil is formed in the planar coil forming step such that the layer has a predetermined dimension gradually reducing as progress toward the vertical direction with a step formed between the layers at the end on the side where bending processing is to be performed. This makes it possible to maintain the characteristics of the coil 100 without reducing the degree of alignment of the wires due to bending processing. Furthermore, bending processing is performed with the coil bending jig T2 including side surface pressing jigs T2a, and the bent coil is then heated after bending processing to perform annealing treatment.

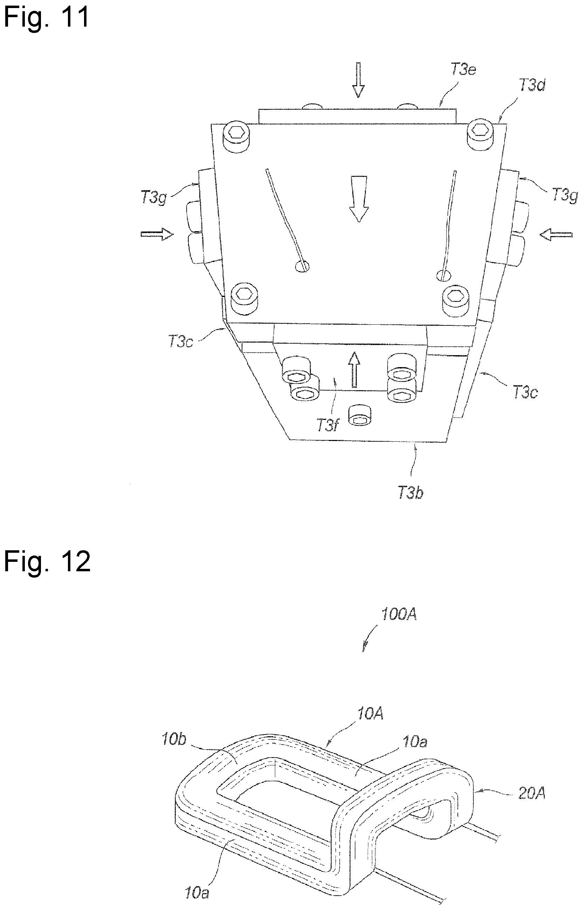

This makes it possible to eliminate a lateral overhang in the bent portion of the coil 100 as shown in Figure 12, and reduce stress between the coil wires and inside the wires to reduce spring back that occurs in the formed product of the coil. This allows the coil dimensions after bending processing to be finished with high accuracy.

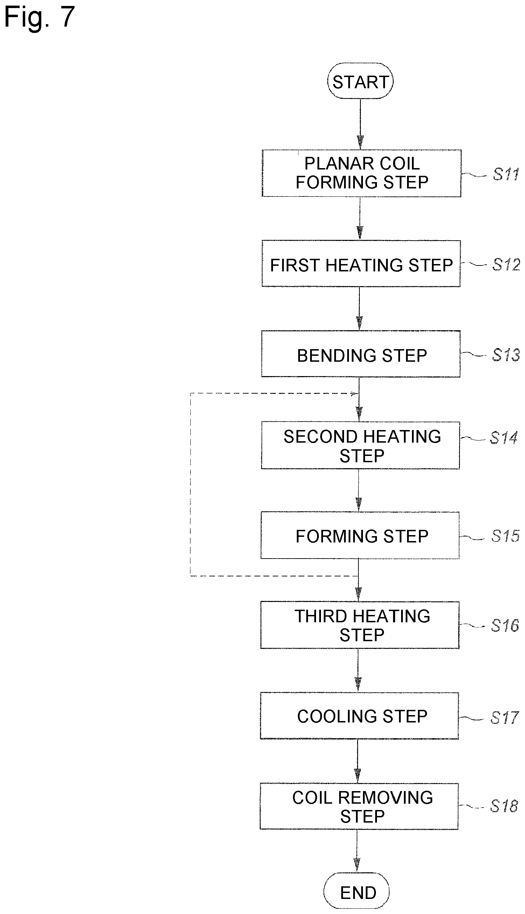

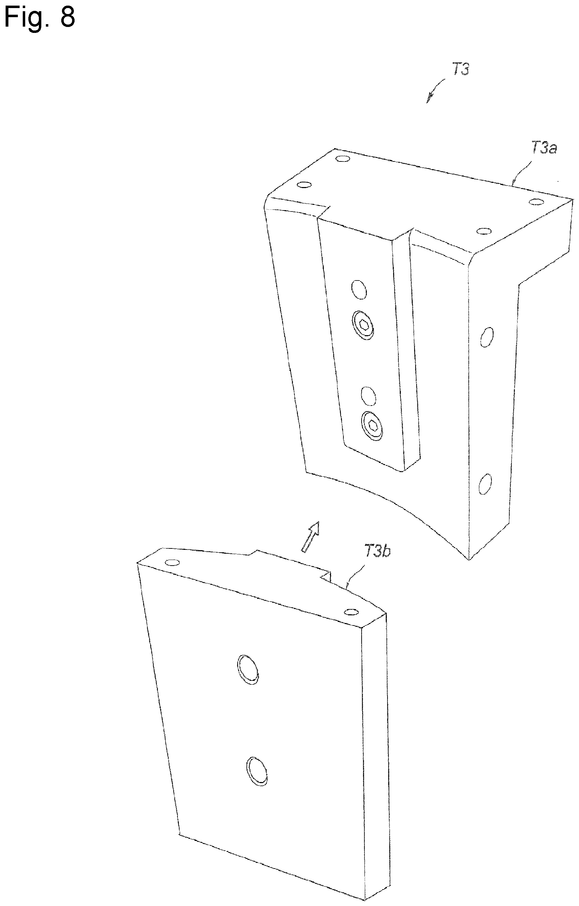

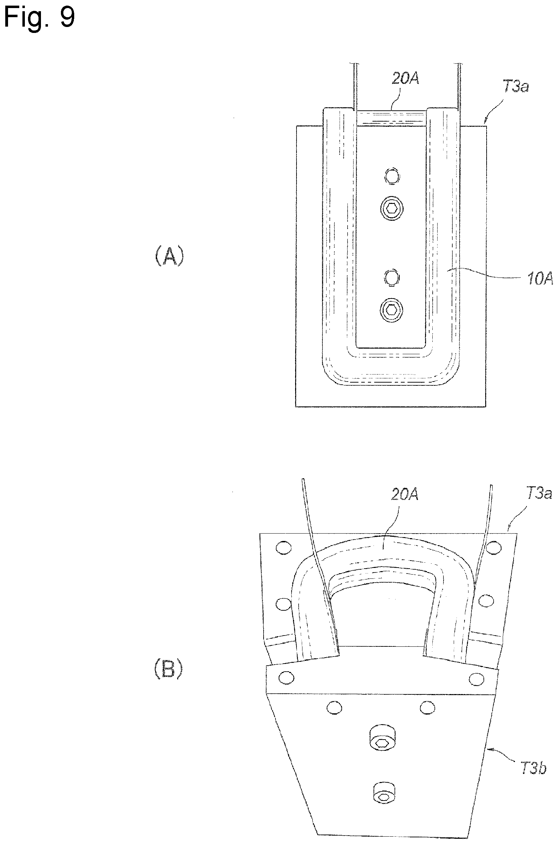

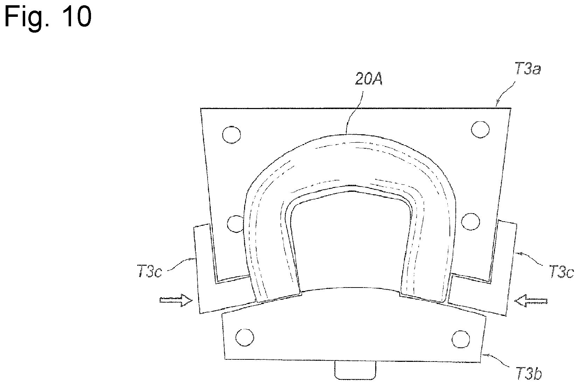

Figure 7 shows steps of manufacturing a hook-shaped coil 100A through a method of manufacturing a coil according to a second embodiment of the present invention. Figure 8 shows an example of a forming jig to be used in the forming step. Figure 9 shows a state in which the bent coil obtained in the bending step is placed in the forming jig and formed by pressing in the forming step. Figure 10 shows a state in which jigs are attached to press the side surfaces of the coil in the forming step. Figure 11 shows a state in which jigs for pressing the hook-shaped bent end portion of the coil are attached in the forming step. In the present embodiment, the coil has a shape in which a bending angle of the L-shape is 90 degrees and further the planar coil portion 10A is curved.

As shown in Figure 7, a method of manufacturing a coil according to the present embodiment includes: a planar coil forming step (step S11) of winding a conductor wire in a plurality of layers (or a plurality of rows and a plurality of layers) to form an air-core planar coil; a first heating step (step S12) of heating the planar coil formed in the planar coil forming step to a predetermined temperature; a bending step (step S13) of bending at least a part of the planar coil heated in the first heating step at a predetermined angle in a direction vertical to the surface of the planar coil; a second heating step (step S14) of heating the bent coil formed in the bending step to a predetermined temperature; a forming step (step S15) of using a forming jig to form the bent coil heated in the second heating step into a predetermined shape and dimensions; a third heating step (step S16) of heating the bent coil formed in the forming step at a predetermined temperature for a predetermined time; a cooling step (step S17) of cooling the bent coil; and a coil removing step (step S18) of removing the bent coil from the bending jig.

As shown in Figure 12, the coil 100A manufactured through the method of manufacturing a coil according to the present embodiment includes a planar coil portion 10A and a bent portion 20A in which the planar coil portion 10A has a curved shape. In the present embodiment, the conductor wire is an enameled wire coated with an insulating film (including a double coated wire having a double insulating layer, etc.) or a self-fusion wire.

As shown in Figure 7, in a method of manufacturing a coil according to the present embodiment, a planar coil forming step (step S11) first winds a conductor wire (for example, an enameled wire without a fusion layer on the surface or a self-fusion wire) in a plurality of layers (or a plurality of rows and a plurality of layers), to form a planar coil having a pair of parallel portions 10a and a connecting portion 10b that connects the one ends of the pair of parallel portions. When an enameled wire is used that does not have a fusion layer on the surface (or a double coated wire having a double insulating layer), only the pair of parallel portions 10a in the planar coil are wound along with application of adhesive varnish to each layer of the parallel portions 10a in the planar coil forming step. In this case, adhesive varnish is applied. Accordingly, after winding, the planar coil is heated to the curing temperature of the adhesive varnish for a predetermined time, so that the winding wire is fixed. In contrast, when a self-fusion wire is used, the winding wire is heated to the curing temperature of the fusion layer, to be fixed. In addition, at the time of winding to form each layer of the planar coil, the planar coil forming step is performed such that the layer has a predetermined dimension ΔL gradually reducing as progress toward the vertical direction (bending direction) with a step formed between the layers at the end on the side where bending processing is to be performed. A part of the planar coil is bent in a vertical direction in the bending step so that the upper end surface formed by the portions that have become vertical is parallel to the plane of the planar coil (see Figure 6).

Next, in the first heating step (step S12), the planar coil, formed in the planar coil forming process, is set in a coil bending jig T2 as shown in Figure 4 and 5, for example, and heated to a predetermined temperature. Here, in the case of a self-fusion wire, the planar coil obtained in the planar coil forming step is heated to the softening temperature (or melting temperature) of the fusion layer on the conductor wire surface. For example, if the fusion layer is a type having a fusion temperature of 150°C, the heating temperature is set to 160 to 170°C. In contrast, in the case of an enameled wire coated with adhesive varnish in the planar coil forming step, the planar coil is heated to the softening temperature of the adhesive varnish (for example, 180°C). Note that since the softening temperatures differ depending on the types of adhesive varnish, the heating temperature can be set appropriately. Here, the heating technique to be used is preferably a technique of raising the temperature of the jig by high-frequency induction heating (IH) to conduct the heat to the coil.

Next, in the bending step (step S13), a part of the planar coil heated to a predetermined temperature is bent in the vertical direction with the coil bending jig T2 as shown in Figures 4 and 5. In the bending step, both side surfaces of the bent portion are pressed with side surface pressing jigs T2a of the coil bending jig T2, and the bending processing is performed with repeated loosening and tightening of the pressure on both side surfaces of the bent portion in order to prevent the coil winding wire from collapsing. In the present invention, the coil bending jig T2 is configured to repeatedly loosen and tighten the pressure on both side surfaces of the bent portion when the bending processing is performed. This can reduce the frictional force between the wires in bending processing. In the case of the coil bending jig T2 shown in Figure 4, the mechanism for repeatedly loosening and tightening the pressure is operated manually. Alternatively, as shown in Figure 5, a drive mechanism having an air cylinder, a servo motor, or the like can be used for the vibration mechanism T2b that repeatedly loosens and tightens the pressure. The vibration width of the vibration mechanism T2b is determined within a range that does not cause the wires to collapse. Note that, in coil bending processing, care needs to be taken not to make the bending radius too small.

Next, in the second heating step (step S14), the bent coil formed and bent into a hook shape in the bending step is heated to a predetermined temperature. Here, in the case of a self-fusion wire, the planar coil obtained in the planar coil forming step is heated to the softening temperature of the fusion layer on the conductor wire surface. For example, if the fusion layer is a type having a fusion temperature of 150°C, the heating temperature is set to 160 to 170°C. In contrast, in the case of an enameled wire coated with adhesive varnish in the planar coil forming step, the planar coil is heated to the softening temperature of the adhesive varnish (for example, 180°C). Here, the heating technique to be used is preferably a technique of raising the temperature of the jig by high-frequency induction heating (IH) to conduct the heat to the coil.

Next, in a forming step (step S15), forming processing is performed on the heated L-shaped bent coil for its shape and outer dimensions with a forming jig T3 (see Figure 8). Here, for example, as shown in Figure 9, the bent coil is set in the forming jig body T3a, and then a back side pressing member T3b is mounted and pressed onto the bent coil, so that the planar coil portion 10A of the bent coil is formed into a predetermined shape (for example, a curved shape bent toward the back side). The forming here is not limited to a curved shape bent toward the back side. The forming jig T3 can be designed as necessary. Next, side surface pressing members T3c for pressing the side surfaces of the planar coil portion 10A of the bent coil are attached so as to press in the direction of arrows in Figure 10 to adjust the shape and dimensions of the side surfaces. Next, there are an upper surface pressing member T3d and end portion side surface pressing members T3e, T3f, and T3g that press the upper surface and four side surfaces of the bent portion 20A of the bent coil. The members T3d, T3e, T3f, and T3g are attached so as to press in the direction of arrows in Figure 11, to adjust the shape and dimensions of the bent portion 20A.

After this forming step, if there is any forming processing for other parts, the above-mentioned steps S14 and S15 are repeated (dotted line arrow in Figure 7).

Next, in a third heating step (step S16), the bent coil is heated at a predetermined temperature (for example, 230°C to 240°C) for a predetermined time (for example, 1.5 h), to perform annealing treatment and cure the fusion layer or adhesive varnish in order to maintain the final shape of the bent coil formed in the forming step. Here, for example, the bent coil and the forming jig T3 are heated together in a state in which the bent coil is mounted on the forming jig T3. Through this, heating the copper after processing causes the fine crystals to recrystallize to soften the copper, making it possible to reduce stress against coil bending and forming processing so that the spring back is made small. This allows the coil dimensions after bending processing to be finished with high accuracy. Here, the heating technique to be used is preferably a technique of raising the temperature of the jig by high-frequency induction heating (IH) to conduct the heat to the coil.

Next, in a cooling step (step S17), the bent coil and forming jig T3 are cooled together to room temperature. Finally, in a coil removing step (step S18), the bent coil is removed from the forming jig T3 to obtain the coil 100A.

As described above, the method of manufacturing a coil according to the second embodiment of the present invention includes: winding a conductor wire in a plurality of layers (or a plurality of rows and a plurality of layers); heating the formed planar coil to a predetermined temperature; bending a part of the planar coil at a predetermined angle in a direction vertical to the surface of the planar coil in the bending step; heating the obtained bent coil at a predetermined temperature for a predetermined time; performing forming processing on the shape and outer dimensions with the forming jig T3 in the forming step; and heating the formed bent coil at a predetermined temperature for a predetermined time to perform annealing treatment. This makes it possible to maintain the characteristics of the coil 100A without reducing the degree of alignment of the wires due to bending processing. Furthermore, bending processing is performed with the coil bending jig T2 including side surface pressing jigs T2a, and the bent coil is then heated after bending processing to perform annealing treatment. This makes it possible to eliminate a lateral overhang in the bent portion of the coil 100A as shown in Figure 12 and reduce stress between the coil wires and inside the wires to reduce spring back that occurs in the formed product of the coil. This allows the coil dimensions after bending processing to be finished with high accuracy.

Note that, in the above-mentioned embodiment, an example has been described in which the first heating step and the bending step are each performed once, but the present invention is not limited to this. For example, in the first heating step and bending step, a plurality of times of heating and bending processing may be performed in different temperature zones.

Furthermore, in the above-mentioned embodiment, an example has been described in which at least a part of the planar coil is bent in the vertical direction (90 degrees) in the bending step of the coil, but the present invention is not limited to this. The part may be bent at an angle of 90 degrees or less or at an angle of 90 degrees or more.

The present invention is not limited to the above-described embodiments, but includes various forms with design changes without departing from the gist of the invention as set forth in the claims, within its technical scope.

Industrial Applicability

The present invention can be used for an object of forming a shape such as hook shape obtained by bending a part of a planar coil, in which conductor wire is wound in a plurality of layers (or a plurality of rows and a plurality of layers), at a predetermined angle in a direction vertical to the plane of the planar coil.

Reference Signs List

1A planar coil
1B L-shaped coil
1a, 10, 10A planar coil portion
10a parallel portion
10b connecting portion
1b, 20, 20A bent portion
21 end surface
100, 100A coil
T1 winding jig
T2 coil bending jig
T2a side surface pressing jig
T2b vibration mechanism
T3 forming jig
T3a forming jig body
T3b back side pressing member
T3c side surface pressing member
T3d upper surface pressing member
T3e, T3f, T3g end portion side surface pressing member

**Claims**

1.   A method of manufacturing a coil, comprising:

a planar coil forming step of winding a conductor wire in a plurality of layers (or a plurality of rows and a plurality of layers) to form an air-core planar coil;
a first heating step of heating the planar coil formed in the planar coil forming step to a predetermined temperature;
a bending step of bending at least a part of the planar coil heated in the first heating step at a predetermined angle in a direction vertical to a plane of the planar coil; and
a second heating step of heating a bent coil formed in the bending step at a predetermined temperature for a predetermined time.

2.   The method of manufacturing a coil according to claim 1, further comprising:

a forming step of forming the bent coil formed in the bending step into a predetermined shape and dimensions with a forming jig; and
a third heating step of heating the bent coil formed in the forming step at a predetermined temperature for a predetermined time.

3.   The method of manufacturing a coil according to claim 1, wherein in the bending step, both side surfaces of a bent portion are pressed with a pressing jig, and bending processing is performed with repeated loosening and tightening of pressure on both sides of the bent portion.

4.   The method of manufacturing a coil according to any one of claims 1 to 3, wherein

the planar coil has a pair of parallel portions that extend parallel to each other and a pair of connecting portions that connect end portions of the pair of parallel portions, and
in the planar coil forming step, only the pair of parallel portions of the planar coil are wound along with application of adhesive varnish to each layer of the parallel portions.

5. The method of manufacturing a coil according to any one of claims 1 to 3, wherein

the conductor wire has a fusion layer on a surface of the conductor wire, and
in the first heating step, the planar coil is heated to a softening temperature of the fusion layer.

6. The method of manufacturing a coil according to any one of claims 1 to 3, wherein in the first heating step and the bending step, heating processing and bending processing are performed separately in a plurality of different temperature zones.

7. The method of manufacturing a coil according to any one of claims 1 to 3, wherein, each layer of the planar coil is formed in the planar coil forming step such that the layer has a predetermined dimension gradually reducing as progress toward the vertical direction with a step formed between the layers at an end on a side where bending processing is to be performed.

8. The method of manufacturing a coil according to any one of claims 1 to 3, wherein in the first heating step, the second heating step, and the third heating step, a heating technique is adopted in which high-frequency induction heating is used to raise a temperature of a jig in which the planar coil or the bent coil is set, to conduct heat from the jig to the planar coil or the bent coil.

9. A coil bending jig for manufacturing a coil having a hook shape obtained by bending a part of a planar coil, in which a conductor wire is wound in a plurality of layers, at a predetermined angle in a direction vertical to a plane of the planar coil, the coil bending jig comprising a pressing jig that presses both side surfaces of a bent portion of the coil, wherein the pressing jig is configured to repeatedly loosen and tighten pressure on both side surfaces of the bent portion when bending processing is performed.

**Amended claims under Art. 19.1 PCT**

1. (amended) A method of manufacturing a coil, comprising:

a planar coil forming step of winding a conductor wire in a plurality of layers (or a plurality of rows and a plurality of layers) to form an air-core planar coil;
a first heating step of heating the planar coil formed in the planar coil forming step to a predetermined temperature;
a bending step of bending at least a part of the planar coil heated in the first heating step at a predetermined angle in a direction vertical to a plane of the planar coil; and
a second heating step of heating a bent coil formed in the bending step at a predetermined temperature for a predetermined time,
wherein in the bending step, both side surfaces of a bent portion are pressed with a pressing jig, and bending processing is performed with repeated loosening and tightening of pressure on both sides of the bent portion.

2. The method of manufacturing a coil according to claim 1, further comprising:

a forming step of forming the bent coil formed in the bending step into a predetermined shape and dimensions with a forming jig; and
a third heating step of heating the bent coil formed in the forming step at a predetermined temperature for a predetermined time.

3. (deleted)

4. (amended) The method of manufacturing a coil according to claim 1 or 2, wherein

the planar coil has a pair of parallel portions that extend parallel to each other and a pair of connecting portions that connect end portions of the pair of parallel portions, and
in the planar coil forming step, only the pair of parallel portions of the planar coil are wound along with application of adhesive varnish to each layer of the parallel portions.

**5.** (amended) The method of manufacturing a coil according to claim 1 or 2, wherein

the conductor wire has a fusion layer on a surface of the conductor wire, and
in the first heating step, the planar coil is heated to a softening temperature of the fusion layer.

**6.** (amended) The method of manufacturing a coil according to claim 1 or 2, wherein in the first heating step and the bending step, heating processing and bending processing are performed separately in a plurality of different temperature zones.

**7.** (amended) The method of manufacturing a coil according to claim 1 or 2, wherein, each layer of the planar coil is formed in the planar coil forming step such that the layer has a predetermined dimension gradually reducing as progress toward the vertical direction with a step formed between the layers at an end on a side where bending processing is to be performed.

**8.** (amended) The method of manufacturing a coil according to claim 1 or 2, wherein in the first heating step, the second heating step, and the third heating step, a heating technique is adopted in which high-frequency induction heating is used to raise a temperature of a jig in which the planar coil or the bent coil is set, to conduct heat from the jig to the planar coil or the bent coil.

**9.** A coil bending jig for manufacturing a coil having a hook shape obtained by bending a part of a planar coil, in which a conductor wire is wound in a plurality of layers, at a predetermined angle in a direction vertical to a plane of the planar coil, the coil bending jig comprising a pressing jig that presses both side surfaces of a bent portion of the coil, wherein the pressing jig is configured to repeatedly loosen and tighten pressure on both side surfaces of the bent portion when bending processing is performed.

**Statement under Art. 19.1 PCT**

Explanation under Article 19(1) of the Convention
Claim 1 of Claims has been amended by adding "wherein in the bending step, both side surfaces of a bent portion are pressed with a pressing jig, and bending processing is performed with repeated loosening and tightening of pressure on both sides of the bent portion". This amendment is based on the statement in Claim 3.
Additionally, Claim 3 has been deleted.
Furthermore, the dependency of Claims 4 to 8 has been changed to "claim 1 or 2".
Note that Claims 2 and 9 remain unchanged.
We believe that the amended claims have novelty and inventiveness with respect to all cited documents.

Fig. 1

```
        ( START )
            |
            v
  +-------------------+
  |   PLANAR COIL     |~ S1
  |   FORMING STEP    |
  +-------------------+
            |
            v
  +-------------------+
  | FIRST HEATING STEP|~ S2
  +-------------------+
            |
            v
  +-------------------+
  |   BENDING STEP    |~ S3
  +-------------------+
            |
            v
  +-------------------+
  |  SECOND HEATING   |~ S4
  |      STEP         |
  +-------------------+
            |
            v
  +-------------------+
  |   COOLING STEP    |~ S5
  +-------------------+
            |
            v
  +-------------------+
  |   COIL REMOVING   |~ S6
  |      STEP         |
  +-------------------+
            |
            v
         ( END )
```

Fig. 2

# Fig. 3

(A)

*T1*

COIL BENDING END SIDE

(B)

BENDING DIRECTION

BENDING
END

$\delta$

$\Delta L$

*10b*

*10a*

Fig. 4

# Fig. 5

(A)

(B)

LIFTING AND LOWERING
LUG FOR BENDING

*T2a*    *T2a*    *T2*

*T2b*    *T2b*

*T2*    *T2b*

α

COIL

COIL

Fig. 6

## Fig. 7

START

PLANAR COIL FORMING STEP — S11

FIRST HEATING STEP — S12

BENDING STEP — S13

SECOND HEATING STEP — S14

FORMING STEP — S15

THIRD HEATING STEP — S16

COOLING STEP — S17

COIL REMOVING STEP — S18

END

Fig. 8

Fig. 9

(A)

20A
T3a
10A

(B)

20A
T3a
T3b

Fig. 10

Fig. 11

T3e

T3d

T3g

T3g

T3c

T3c

T3f

T3b

Fig. 12

100A

10A

10b

10a

20A

10a

## Fig. 13

(A)

1A

SQUARE WIRE     1a           BENDING END

(B)

1B

UPPER END SURFACE

1b

90°

SQUARE WIRE     1a

DIFFERENCE IN POSITION

Fig. 14

(A)

(B)

<p style="text-align:center">INTERNATIONAL SEARCH REPORT</p>

| International application No. |
| --- |
| **PCT/JP2022/024375** |

**A. CLASSIFICATION OF SUBJECT MATTER**

*H01F 41/04*(2006.01)i; *B21F 3/06*(2006.01)i; *H02K 3/04*(2006.01)i; *H02K 15/04*(2006.01)i
FI: H01F41/04 A; H02K15/04 C; H02K3/04; H01F41/04 F; B21F3/06 A

According to International Patent Classification (IPC) or to both national classification and IPC

**B. FIELDS SEARCHED**

Minimum documentation searched (classification system followed by classification symbols)

H01F41/04; B21F3/06; H02K3/04; H02K15/04

Documentation searched other than minimum documentation to the extent that such documents are included in the fields searched

Published examined utility model applications of Japan 1922-1996
Published unexamined utility model applications of Japan 1971-2022
Registered utility model specifications of Japan 1996-2022
Published registered utility model applications of Japan 1994-2022

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
| --- | --- | --- |
| X | JP 63-29918 A (SONY CHEMICALS CORP.) 08 February 1988 (1988-02-08)<br>p. 2, lower right column to p. 4, upper right column, fig. 1-7 | 1, 5 |
| Y | | 2, 6-8 |
| A | | 3, 4, 9 |
| Y | JP 2008-312352 A (HONDA MOTOR CO., LTD.) 25 December 2008 (2008-12-25)<br>paragraphs [0016]-[0018], fig. 4 | 2, 6-8 |
| A | | 3, 4, 9 |
| Y | WO 2020/077339 A1 (SOFTWARE MOTOR CO.) 16 April 2020 (2020-04-16)<br>paragraph [00036] | 2, 6-8 |
| A | | 3, 4, 9 |
| Y | JP 2015-12664 A (SUMITOMO HEAVY INDUSTRIES, LTD.) 19 January 2015<br>(2015-01-19)<br>paragraphs [0020]-[0034], fig. 3-6 | 7 |
| A | | 3, 4, 9 |

☑ Further documents are listed in the continuation of Box C.    ☑ See patent family annex.

| * Special categories of cited documents: | "T" later document published after the international filing date or priority date and not in conflict with the application but cited to understand the principle or theory underlying the invention |
| --- | --- |
| "A" document defining the general state of the art which is not considered to be of particular relevance | |
| "E" earlier application or patent but published on or after the international filing date | "X" document of particular relevance; the claimed invention cannot be considered novel or cannot be considered to involve an inventive step when the document is taken alone |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search | Date of mailing of the international search report |
| --- | --- |
| **07 July 2022** | **19 July 2022** |

| Name and mailing address of the ISA/JP | Authorized officer |
| --- | --- |
| **Japan Patent Office (ISA/JP)**<br>**3-4-3 Kasumigaseki, Chiyoda-ku, Tokyo 100-8915**<br>**Japan** | |
| | Telephone No. |

Form PCT/ISA/210 (second sheet) (January 2015)

**INTERNATIONAL SEARCH REPORT**

International application No.

**PCT/JP2022/024375**

C.      DOCUMENTS CONSIDERED TO BE RELEVANT

| Category* | Citation of document, with indication, where appropriate, of the relevant passages | Relevant to claim No. |
|---|---|---|
| A | JP 2019-153568 A (HITACHI METALS LTD.) 12 September 2019 (2019-09-12) | 1-9 |
| A | JP 2000-217291 A (FUJI ELECTRIC CO., LTD.) 04 August 2000 (2000-08-04) | 1-9 |
| A | JP 2003-70197 A (MITSUBISHI MATERIALS CORP.) 07 March 2003 (2003-03-07) | 1-9 |
| A | JP 60-74406 A (HITACHI, LTD.) 26 April 1985 (1985-04-26) | 1-9 |
| A | JP 63-117640 A (MITSUBISHI ELECTRIC CORP.) 21 May 1988 (1988-05-21) | 1-9 |
| A | JP 1-308148 A (ALPS ELECTRIC CO., LTD.) 12 December 1989 (1989-12-12) | 1-9 |
| A | WO 2016/088270 A1 (HITACHI, LTD.) 09 June 2016 (2016-06-09) | 1-9 |

Form PCT/ISA/210 (second sheet) (January 2015)

**INTERNATIONAL SEARCH REPORT**
Information on patent family members

International application No.

**PCT/JP2022/024375**

| Patent document cited in search report | | | Publication date (day/month/year) | Patent family member(s) | | | Publication date (day/month/year) |
|---|---|---|---|---|---|---|---|
| JP | 63-29918 | A | 08 February 1988 | (Family: none) | | | |
| JP | 2008-312352 | A | 25 December 2008 | (Family: none) | | | |
| WO | 2020/077339 | A1 | 16 April 2020 | US | 2020/0177042 | A1 | |
| | | | | JP | 2021-536209 | A | |
| | | | | paragraph [0030] | | | |
| | | | | EP | 3807976 | A | |
| | | | | CN | 112438009 | A | |
| | | | | KR | 10-2021-0041027 | A | |
| JP | 2015-12664 | A | 19 January 2015 | JP | 2018-139496 | A | |
| | | | | US | 2016/0105087 | A1 | |
| | | | | paragraphs [0030]-[0044], fig. 3-6 | | | |
| | | | | WO | 2014/208161 | A1 | |
| | | | | TW | 201501453 | A | |
| JP | 2019-153568 | A | 12 September 2019 | JP | 6516117 | B1 | |
| | | | | US | 2019/0272932 | A1 | |
| | | | | DE | 102018123950 | A1 | |
| | | | | CN | 110223801 | A | |
| JP | 2000-217291 | A | 04 August 2000 | (Family: none) | | | |
| JP | 2003-70197 | A | 07 March 2003 | (Family: none) | | | |
| JP | 60-74406 | A | 26 April 1985 | (Family: none) | | | |
| JP | 63-117640 | A | 21 May 1988 | (Family: none) | | | |
| JP | 1-308148 | A | 12 December 1989 | (Family: none) | | | |
| WO | 2016/088270 | A1 | 09 June 2016 | (Family: none) | | | |

Form PCT/ISA/210 (patent family annex) (January 2015)

**EP 4 407 645 A1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2013251995 A